# EUROPEAN PATENT APPLICATION

(11) **EP 1 646 226 A1**
(43) Date of publication of application: **12.04.2006**
(21) Application number: 04292377.1
(22) Date of filing: 06.10.2004
(51) Int. Cl.: H04N 5/21, H04N 17/00

(54) **Video apparatus with controllable processing means and method for controlling the processing means**

(71) Applicant: Thomson Licensing, 92100 Boulogne-Billancourt (FR)
(72) Inventor: Dumont, Frank, 269564 Singapore (SG); Tan, Chee Lam, 730520 Singapore (SG); Li, Hua, 680422 Singapore (SG)
(74) Representative: Rossmanith, Manfred

(57) **Abstract**

A video apparatus has a receiver (5) for receiving and converting an RF signal (RF) into a video signal (CVBS; YCrCb). The video signal (CVBS; YCrCb) is then processed (notably encoded) into an encoded digital stream (MPEG) by processing means (8; 10). The processing means (8; 10) is adjusted based on an indicator (SAMP) of a characteristic of the video signal (CVBS).

A method for controlling the processing means is suggested.

## Description

The invention relates to a video apparatus with a receiver and processing means.

A video apparatus often comprises a receiver which is meant to produce a video signal (e.g. an analogue video signal according to the NTSC or PAL standard) based on an RF signal received from a remote broadcaster.

It becomes common practice nowadays to provide such a video apparatus with an encoder (e.g. a MPEG encoder) in order to convert the received video signal into an encoded stream (e.g. a MPEG encoded digital stream).

This is useful notably to record the received video sequence as a digital stream on a medium, for instance on a DVD or on a hard-disk drive located in the apparatus.

A problem in such a system is that the received video signal may be noisy and may lead therefore to an encoded stream with defects (artefacts). These defects clearly appear as macro-blocks when the video sequence coded by the encoded stream is displayed.

In order to avoid appearance of these artefacts, the video signal is sometimes processed in a specific way; for instance, the video signal is processed through a low-pass filter before being encoded. However, this specific processing generally has some limitations or drawbacks. E.g. the low-pass filter may remove the details of a video sequence (high frequency part of the video signal), even when the received video signal has a good quality (good signal-to-noise ratio).

In order to avoid this problem the copending European patent application 03 100 989.7 proposes a video apparatus, which sets the luminance filter characteristic as a function of the tuner signal quality. The known apparatus determines the tuner signal quality by means of the IF signal amplitude or the feedback signal of the automatic gain control loop of the receiver.

The object of the present invention is to provide an improved video apparatus. The object is solved by a video apparatus comprising a receiver for converting an RF signal into a video signal, processing means receiving the video signal and outputting an encoded stream based on the video signal, an indicator of a characteristic of the RF signal and control means for adjusting the processing means based on the indicator. According to the invention the indicator is associated with the noise level of a sync signal included in the video signal.

In an advantageous embodiment of the invention the indicator corresponds to the mean value of the minimum and maximum values of the sync signal during a capturing interval. The capture may substantially be defined by the falling and the rising edge of the sync signal.

In one embodiment of the invention calculation means are provided to average the mean value of the minimum and maximum values of the sync signal for a plurality of fields of the video signal.

It is thus possible to adjust the processing depending on the received RF signal, to best match the treatment needed by the signal.

According to a advantageous embodiment, the processing means includes an adjustable filter and the control means includes means for adjusting the adjustable filter based on the indicator.

The receiver outputs for instance the video signal as an analogue signal and a video decoder converts the analogue signal into a digital stream.

The adjustable filter is for instance part of the video decoder.

According to another possible solution, that may be combined with the previous one, the processing means includes an encoder having an adjustable encoding bit-rate and the control means includes means for adjusting the encoding bit-rate based on the indicator.

According to a advantageous embodiment, the control means comprises a micro-processor. The micro-processor preferably has means for receiving a signal representative of the indicator and means for sending control data to adjust the processing means.

It is another object of the present invention to provide a method for adjusting the processing means in a video apparatus.

The object is solved by a method according to claim 11. The inventive method comprises the following steps:
a) converting an RF signal into an analog video signal (CVBS);
b) calculating the mean value of a sync signal contained in the analogue video signal (CVBS);
c) identifying the mean value calculated in step b) as an indicator for the noise level of the analogue video signal (CVBS);
d) controlling the processing means (8, 10) as a function of the indicator.

It is an advantage of the inventive method that it achieves reliable results for any kind of video sources including analogue video cassette recorders.

In practice it has been found advantageous to supplement the inventive method by the additional steps:
e) repeating step b) for several sequential fields, and
f) identifying the average of the several means values achieved in step e) as an indicator for the noise level of the analogue video signal (CVBS).

This embodiment of the inventive method allows to compensate for imprecise measurements of the mean value of the sync signal.

Other features of the invention will appear in the below description made in reference to :
- Figure 1 representing a video apparatus according to a first embodiment of the invention;
- Figure 2 detailing the front-end of the video apparatus of Figure 1;
- Figure 3 detailing the video decoder of the video apparatus of Figure 1;
- Figure 4a showing a video signal with a high signal to noise ratio;
- Figure 4b showing the sync signal contained in a video signal having a low signal to noise ratio;
- Figure 5 exhibiting the relation between the mean value of the sync signal and the signal to noise ratio of the video signal; and
- Figure 6 displaying different luminance filter characteristics.

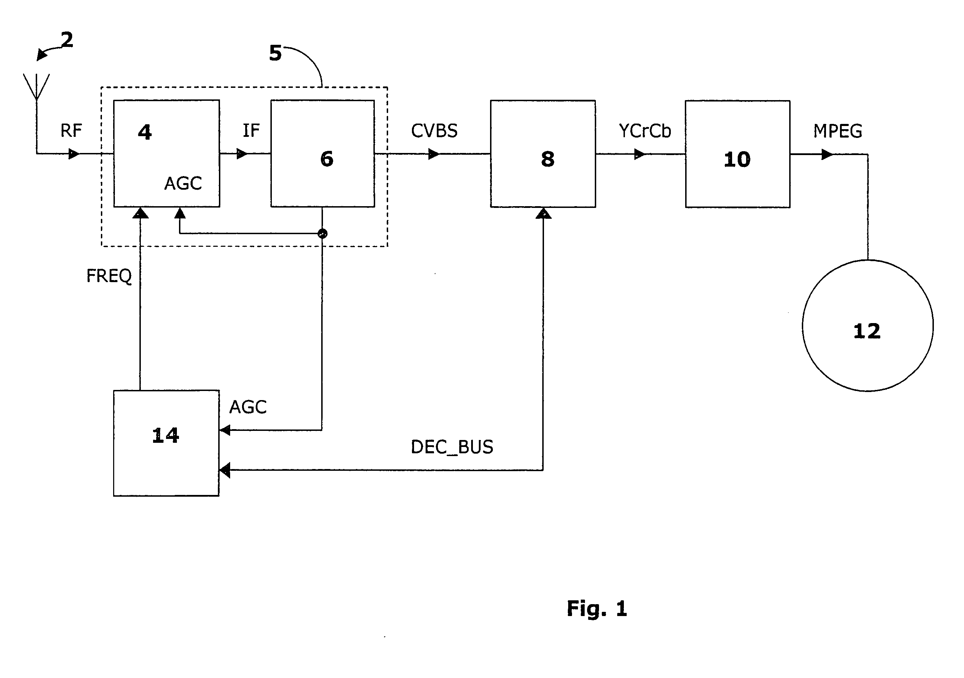

The video apparatus of Figure 1 receives an RF signal (radio frequency signal) on an antenna 2. A tuner 4 converts the RF signal at a selected frequency to a signal IF at the intermediate frequency. The selected frequency is determined by frequency data FREQ received from a main micro-processor 14 of the video apparatus over a tuner bus and corresponds to a channel for the user.

The signal IF at the intermediate frequency is converted into an analogue base band video signal CVBS by a demodulator 6. This analogue video signal is a viewable signal, for instance a PAL-,SECAM- or NTSC-formatted analogue video signal.

The tuner 4 and the demodulator 6 are implemented together in a front-end 5 which forms the essential element of the receiver.

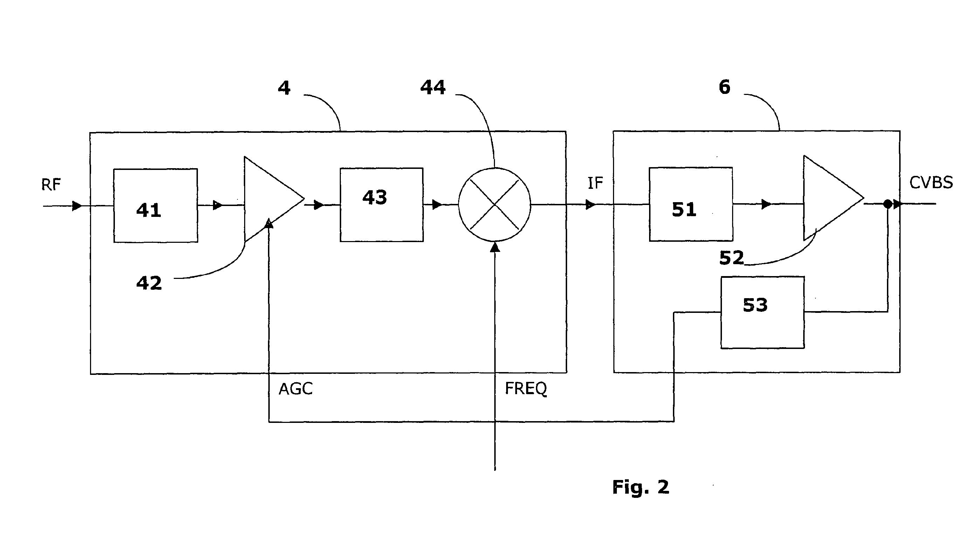

A detailed view of the front-end 5 is represented on Figure 2.

The tuner 4 has a first band-pass filter (BPF) 41 filtering the incoming RF signal. The filtered RF signal is then amplified by an automatic gain controlled (AGC) amplifier 42, which gain is controlled by a control signal AGC (generally called the AGC feedback voltage) from the demodulator 6 as further explained below.

The amplified RF signal 42 goes through a second band-pass filter 43 to get to a mixer 44 where it is mixed with a frequency defined by the frequency data FREQ (based on user selection) so that the signal at the selected frequency (selected channel) is output from the tuner 4 at the intermediate frequency IF (IF signal).

The IF signal is then processed trough the demodulator 6, i.e. roughly speaking through a third band-pass filter 51 and an amplifier 52, into an analogue video signal CVBS. Based on this analogue video signal CVBS, and notably on the amplitude of this analogue video signal CVBS, the AGC feedback voltage (control signal AGC for the AGC amplifier 42) is generated by an AGC generator 53.

The purpose of the AGC amplifier 42 is to get a constant amplitude or envelope of the output analogue video signal CVBS whatever the level (or amplitude) of the received RF signal. This aim is generally reached by adapting the gain of the AGC amplifier 42 thanks to the AGC generator 53, depending on the amplitude of the analogue video signal CVBS (according to the feedback principle).

However, the AGC amplifier 42 practically has a limited range and the low and very low RF signals cannot consequently be amplified to the desired amplitude in the analogue video signal CVBS. In such a case, the AGC generator consequently keeps on requesting the maximum possible amplification and correspondingly sends out a high level AGC feedback voltage, for instance 3.8 V.

For theses reasons, when the RF signal is above 60 dBµV, the AGC gain of AGC amplifier 42 is controlled by varying the AGC feedback voltage below 3.8 V to get a roughly constant envelope of the output video signal CVBS (which corresponds to an IF signal of 102 dBµV). When the RF signal is below 60 dBµV, the gain of AGC amplifier 42 is controlled to be maximum, by transmitting an AGC feedback voltage of 3.8 V.

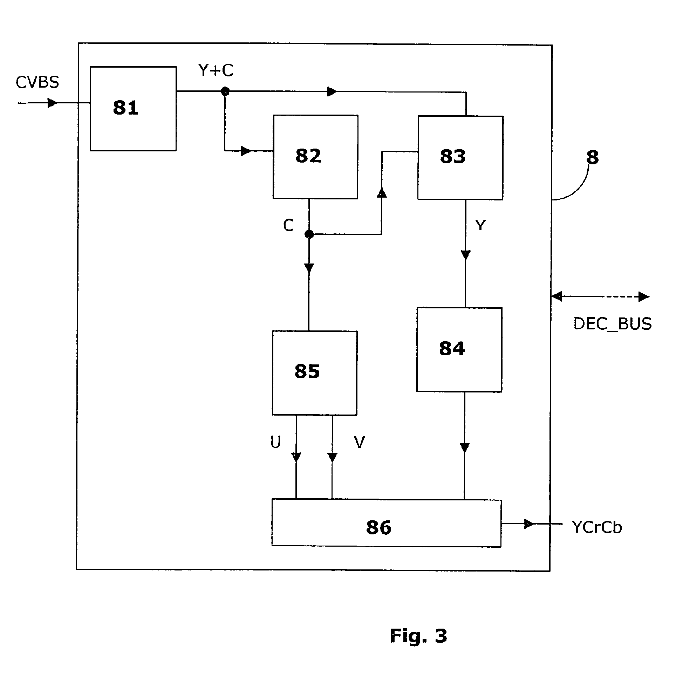

Back to Figure 1, the analogue video signal CVBS output by the demodulator 6 is transmitted to a video decoder 8 (e.g. one of the Philips SAA711x family) which converts it into a digital video stream YCrCb, for instance as a 4:2:2 stream. An exemplary video decoder 8 is represented on Figure 3.

The incoming analogue video signal CVBS is converted into an unprocessed digital stream Y+C by an analogue-to-digital converter (ADC) 81. A comb filter 82 separates the chrominance from the unprocessed digital stream Y+C and outputs an unprocessed chrominance stream C. The unprocessed chrominance stream C is notably passed to a subtractor 83 to be subtracted from the unprocessed digital stream Y+C in order to output the unprocessed luminance stream Y.

The unprocessed luminance stream Y is processed trough a luminance filter block 84 which can be operated as an adjustable sharpness filter. The luminance or sharpness filter is adjusted according to control data (parameter LUFI[3:0] for the Philips SAA711x family) received from the main micro-processor 14 over a decoder bus DEC_BUS as explained below.

The unprocessed chrominance stream C is processed through a chrominance processing block 85 which notably separates the two chrominance components U and V.

The processed luminance stream and chrominance streams U, V are received by a multiplexer block 86 which combines them into a digital video stream YCrCb. The multiplexer block 86 may also provide further processing of the digital stream, such as saturation control.

The digital video stream YCrCb is encoded into a MPEG stream by an MPEG encoder 10. The MPEG stream is then ready to be recorded on a medium 12.

The main micro-processor 14 receives the AGC feedback voltage from the demodulator 6 and sets the control data for the adjustable sharpness filter depending on the gain.

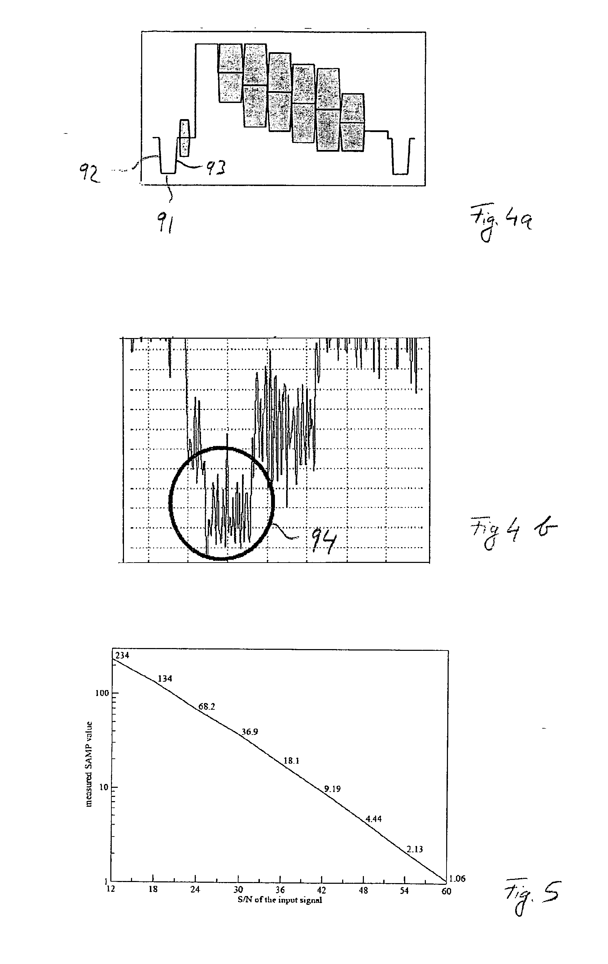

The analogue input of the video decoder 8 receives the analogue video signal CVBS and analyses the synchronisation or sync signals in the following way. Illustrative examples of the sync signal 91 are shown in figures 4a and 4b. The video decoder 8 determines the minimum and maximum values of the sync signal within a predetermined capture window. The capture window is substantially defined by the main falling and the main rising edge of the sync signal 92, 93, respectively (figures 4a, 4b). In figure 4b the capture window is shown as a circle 94.

In a specific embodiment of the present invention the video decoder is a Philips SAA 7119 having a dedicated register called "sync-ampl". The "sync-ampl" register contains the mean value SAMP of all minimum and maximum values of the sync signal registered within the capture window of the last field. Since the sync tip level of the sync signal is generally clamped to 0 V the average value contained in the "sync-ampl" register is small if the analogue video signal CVBS has a low noise level as it is shown in figure 4a. Contrary to that, if the analogue video signal CVBS is noisy the value of register "sync-ampl" is increasing. The value of the "sync-ampl" register displays a substantial relation to the noise level of the analogue video signal CVBS.

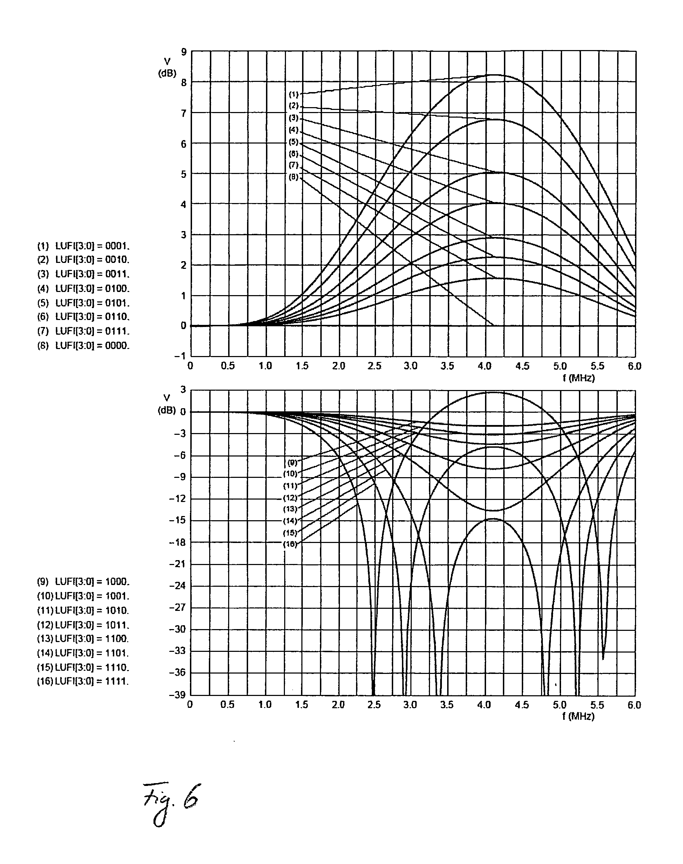

Figure 5 shows a schematic diagram to explain the relation between the mean value SAMP and the actual signal to noise ratio of the input analogue video signal CVBS. It is noted that the measurements shown in figure 5 are made with a standard compliant CVBS signal of 70% picture content ratio and 30% sync signal. I.e. 70% of the total analogue video signal amplitude are attributed to picture content from the black level to the white level, whereas 30% of this total amplitude are attributed to the separation between the bottom of the sync signal and the black level.

The capturing algorithm for calculating the mean value SAMP stored in the "sync-ampl" register used e.g. in the Philips SAA 7119 is not conceived for precision measurements. The standard deviation of a single measurement is typically in the range of 6% to 8% of the measured value in the range of 10 to 42 dB signal to noise ratio. If the signal to noise ratio is bigger than 42 dB the standard deviation increases due to the poor resolution of the result.

In order to compensate for the mentioned imperfections of the measurement of the mean value SAMP one embodiment of the invention is provided with control means (not shown in the drawing) to repeat the measurement of the mean value SAMP sequentially for a number of fields. E.g. the measurements may be repeated for 10 sequential field and the arithmetic mean value is utilized as the mean value SAMP. A central processing unit (CPU) (not shown) and corresponding software execute the calculation of the arithmetic mean value. However, in other embodiments also dedicated hard- and software may be provided to perform this task. The described approach of repeated measurements is applicable for any kind of video decoder 8 and not limited to those mentioned in the description of the present invention. A prerequisite for this approach is only that in one way or another the mean value of the minimum and maximum values of the sync signal within the capturing window can be provided.

Finally, it is noted that the "sync-ampl" register contains the value zero if no sync signal can be detected.

The thus achieved mean value SAMP is used to adjust the sharpness filter selection by suitable control data. In the case of the Philips SAA 711x family this is the parameter (LUFI [3:0]).

The following table 1 illustrates the relation between signal amplitude, picture quality and SAMP value:

| Signal amplitude | Picture quality | SAMP value |
|---|---|---|
| >45 dBµV | Clean | <13 |
| 45 - 40 dBµV | Noisy | 13 - 30 |
| <40 dBµV | Very noisy | >30 |
| Invalid signal | | <5 |

Depending on the actual SAMP value the parameter (LUFI [3:0]) may be selected e.g. in the range of 0001 to 1111 in the case of the Philips SAA 711x family. However, the actual selection of the parameter (LUFI [3:0]) depends not only on the noise level of the signal, i.e. the SAMP value, but also on the MPEG-2 encoding bit rate. Of course MPEG-2 encoding is only presented as one example. In principle the invention is applicable to any kind of digital encoding method, e.g. constant bit rate (CBR) encoding according to the MPEG-1 standard. Contrary to that the MPEG-2 encoding is a variable bit rate (VBR) encoding method.

The CBR encoding according to the MPEG-1 standard with a data rate of 1Mbps is used for example for a low quality recording. Typically one achieves 8 hours recording time on a recordable DVD disk. For other encoding methods having higher bit rates VBR encoding according to the MPEG-2 standard is utilized. The VBR mode consists of a maximum video bit rate and average video bit rate and is adjusted accordingly to the selected quality mode (HQ,SP,LP,...). It is noted that the bit rate values in table 2 shown below refer to the maximum bit rate (HQ = 9.4Mbps, SP = 4.7Mbps,....). The meaning of the different quality modes is explained below. Both the maximum and the average bit rates are default settings. The advantage of the VBR is, that only when there is a high demand of encoding bits, the bit rate shoots up to the maximum bit rate, e.g. when fast movements or noise are present in the picture. If this is not the case it tries to maintain the average bit rate in order to match a limited disc space (e.g. 4.7GB).

If the picture is noisy the demand of bits will be huge. At the same time the encoder tries to limit the bit rate to the average bit rate, which is insufficient and artefacts start to accrue. With the adaptive filter setting the noise level will drop and the demand of bits as well as the artefacts is reduced. This approach is referred to as an indirect way to adjust the bit rate.

Table 2 shows the setting of the parameter (LUFI[3:0]) as a function of the SAMP value and the selected variable bit rate:

| SAMP value | HQ 9.4 Mbps | SP 4.7 Mbps | LP 3.7 Mbps | EP 3.0 Mbps | SLP 2.2 Mbps | SEP 1.4 Mbps |
|---|---|---|---|---|---|---|
| <13 | 0000 | 0000 | 0000 | 0000 | 1011 | 1100 |
| 13 - 30 | 0000 | 0000 | 1011 | 1100 | 1101 | 1101 |
| >30 | 0000 | 1011 | 1100 | 1101 | 1101 | 1101 |

The acronyms used in table 2 mean the following: HQ, High Quality; SP, Standard Play; LP, Long Play; EP, Extended Play; SLP, Super Long Play; SEP, Super Extended Play.

Besides the indirect way of reducing the bit rate there is also a direct way of adjusting the variable bit rate in order to save space on the disc and to maintain the picture quality at the same time.

If low noise is detected the average bit rate can be lower because of less demand. Contrary to that, if much noise is detected, the average bit rate is increased in order to avoid artefacts and optimise the picture quality.

The direct way enables an automatic optimisation process or measuring procedure of various parameters including the maximum bit rate. It is possible to record a video sequence of a given length on a given available disk space with optimum picture quality by adjusting the variable bit rate as explained above.

Figure 6 displays the luminance filter characteristic of the Philips SAA 7119 for different control data (LUFI[3:0]).

The invention is of course not limited to the embodiments which have been described above.

Notably, other parameters of the receiver can be used instead of the gain of an amplifier as an indicator of the reception quality.

Similarly, the operating parameter of the receiver can be transmitted by other means than described above. For instance, the operating parameter which is used as an indicator of the reception quality can be transmitted over the tuner bus.

Besides, the invention does not specify whether the filter is analogue or digital. The adjustable filter can consequently act before or after analogue-to-digital conversion.

As already indicated, other parts of the processing means than the adjustable filter can be adjusted depending on the receiver parameter: the encoding bit-rate of the encoder can for instance be adjusted based on the receiver parameter. Similarly, other filters, such as a filter for luminance/chrominance noise reduction in the MPEG encoder 10, can be used.

## Claims

1. Video apparatus comprising :
- a receiver (5; 5, 8) for converting an RF signal (RF) into a video signal (CVBS);
- processing means (8; 10) receiving the video signal (CVBS) and outputting an encoded stream (YCrCb; MPEG) based on the video signal (CBVS);
- an indicator (SAMP) of a characteristic of the video signal (CVBS);
- control means (14) for adjusting the processing means (8; 10) based on the indicator (SAMP);
**characterized in that**
the indicator is associated with the noise level of a sync signal included in the video signal (CVBS).

2. Video apparatus according to claim 1, **characterized in that** the indicator corresponds to the mean value of the minimum and maximum values of the sync signal during a capture interval.

3. Video apparatus according to claim 2, **characterized in that** the capture interval is substantially defined by the falling and the rising edge of the sync signal.

4. Video apparatus according to claim 2, **characterized in that** calculation means are provided to average the mean value of the minimum and maximum values of the sync signal for a plurality of fields of the video signal (CVBS).

5. Video apparatus according to claim 1, wherein the processing means (8; 10) includes an adjustable filter (84) and wherein the control means (14) includes means for adjusting the adjustable filter (84) based on the indicator (SAMP).

6. Video apparatus according to claim 5, wherein the receiver (5) outputs the video signal (CVBS) as an analogue signal and wherein a video decoder (8) converts the analogue signal (CVBS) into a digital stream (YCrCb).

7. Video apparatus according to claim 6, wherein the video decoder (8) comprises the adjustable filter (84).

8. Video apparatus according to claim 1, wherein the processing means includes an encoder (10) having an adjustable encoding bit-rate and wherein the control means (14) includes means for adjusting the encoding bit-rate based on the indicator (SAMP).

9. Video apparatus according to any of claims 1 to 8, wherein the control means comprises a micro-processor (14).

10. Video apparatus according to claim 9, wherein the micro-processor (14) has means for receiving a signal representative of the indicator (SAMP) and means (DEC_BUS) for sending control data to adjust the processing means (8).

11. Method for adjusting the processing means (8, 10) in a video apparatus, where in the method comprises the following steps:
a) converting an RF signal into an analog video signal (CVBS);
b) calculating the mean value of a sync signal contained in the analogue video signal (CVBS);
c) identifying the mean value calculated in step b) as an indicator for the noise level of the analogue video signal (CVBS);
d) controlling the processing means (8, 10) as a function of the indicator.

12. Method according to claim 11, **characterized by**
e) repeating step b) for several sequential fields, and
f) identifying the average of the several mean values achieved in step e) as an indicator for the noise level of the analogue video signal (CVBS).
